# EUROPÄISCHE PATENTANMELDUNG

(11) **EP 1 659 489 A1**
(43) Veröffentlichungstag der Anmeldung: **24.05.2006**
(21) Anmeldenummer: 05019406.7
(22) Anmeldetag: 07.09.2005
(51) Int. Cl.: G06F 9/445, G05B 19/04

(54) **Systemanordnung und Verfahren in einem prozessverarbeitenden System zum Erkennen von nicht übereinstimmender Funktionalität zwischen einer Gerätesoftware und einem zugeordneten Gerätetreiber**

(30) Priorität: 19.11.2004 DE 102004055993
(71) Anmelder: VEGA Grieshaber KG, 77709 Wolfach (DE)
(72) Erfinder: Faist, Fridolin, 77709 Oberwolfach (DE); Isenmann, Andreas, 77716 Haslach (DE)
(74) Vertreter: Patentanwälte Westphal, Mussgnug & Partner

(57) **Zusammenfassung**

Die Erfindung bezieht sich auf ein Verfahren in einem prozessverarbeitenden System zum Erkennen von nicht übereinstimmender Funktionalität zwischen einer Gerätesoftware und einem zugeordneten Gerätetreiber, bei dem zwischen einer Geräte-Steuervorrichtung (GC) und einem Gerät (G) über eine Schnittstelle (CI, GI) zwischen der Geräte-Steuervorrichtung (GC) und dem Gerät (G) eine Gerätetreiberversionsinformation (TR-ID) und/oder eine Gerätesoftwareversionsinformation (SW-ID) übertragen wird, die Gerätetreiberversionsinformation (TR-ID) und die Gerätesoftwareversionsinformation (SW-ID) hinsichtlich Kompatibilität der übereinstimmenden Funktionalitäten miteinander verglichen werden und im Fall nicht vorhandener Kompatibilität ein Update durchgeführt wird und/oder eine Fehlermeldung ausgegeben wird. Entsprechend bezieht sich die Erfindung auch auf eine geeignete Systemanordnung zum Durchführen eines solchen Verfahrens.

## Beschreibung

Systemanordnung und Verfahren in einem prozessverarbeitenden System zum Erkennen von nicht übereinstimmender Funktionalität zwischen einer Gerätesoftware und einem zugeordneten Gerätetreiber

Die Erfindung bezieht sich auf eine Systemanordnung in einem prozessverarbeitenden System zum Erkennen von nicht übereinstimmender Funktionalität zwischen einer Gerätesoftware und einem zugeordneten Gerätetreiber mit den oberbegrifflichen Merkmalen des Patentanspruchs 1 bzw. auf ein Verfahren in einem prozessverarbeitenden System zum Erkennen von nicht übereinstimmender Funktionalität zwischen einer Gerätesoftware und einem zugeordneten Gerätetreiber.

Im Umfeld der Mess- und Regeltechnik wie auch der prozessverarbeitenden Systeme, wo Sensoren bzw. Aktoren an eine Steuerung oder an ein Analysesystem angebunden sind, werden immer mehr einstellbare Funktionen zur Verfügung gestellt. Zur Einstellung dieser Funktionen werden Gerätetreiber bzw. Softwarekomponenten angeboten, welche genau den Funktionsumfang eines einzelnen Geräts abdecken.

Immer mehr Geräte der Mess- und Regeltechnik verfügen dabei über einen Microcontroler. In solchen Geräten wird die zur Verfügung stehende Funktionalität nicht nur durch die Hardware alleine, sondern auch und wesentlich durch die Gerätesoftware bestimmt. Dies hat zur Folge, dass sich Geräte mit identischer Hardware funktional unterscheiden, und zwar abhängig von der im Gerät installierten Gerätesoftware.

Eine Änderung der Gerätesoftware dient in der Regel zur Behebung eines Fehlers in der bestehenden Gerätesoftware und/oder zur Erweiterung der bisherigen Funktionalität des Funktionsumfangs um neue Funktionen.

Zu solchen Geräten der Mess- und Regeltechnik existieren oft auch Softwarekomponenten, welche zur Bedienung, Parametrierung oder Diagnose der Geräte bestimmt sind. Solche Softwarekomponenten werden als Gerätetreiber bezeichnet. Diese Gerätetreiber werden nicht auf dem eigentlichen Gerät sondern beispielsweise auf einem normalen Personal-Computer als externem Steuercomputer oder als externe Aufnahme (z. B. Memorystick) für das Gerät ausgeführt. Der Funktionsumfang eines Gerätetreibers muss den Funktionsumfang des entsprechenden Gerätes wiederspiegeln.

Wenn sich der Funktionsumfang des Gerätes durch ein Update der Gerätesoftware ändern lässt, ist offensichtlich, dass im Fall einer Änderung Konflikte zwischen Gerätetreiber und Gerätesoftware entstehen können. Im Fall eines Gerätetreibers mit einer Basisfunktionalität und einer entsprechenden Firmware bzw. Software mit Basisfunktionalität besteht kein Problem. Ist die Software jedoch mit einer erweiterten Funktionalität ausgestattet, kann der Gerätetreiber diese erweiterte Funktionalität nicht unterstützen und der Anwender des Geräts kann die vorhandene Funktionalität nicht nutzen. Im Fall eines Gerätetreibers mit erweiterter Funktionalität und auch einer Software bzw. Firmware mit erweiterter Funktionalität besteht kein Problem. Fehlt bei der Software jedoch die erweiterte Funktionalität, bietet der Gerätetreiber dem Benutzer des Gerätes eine Funktionalität an, welche im Gerät gar nicht zur Verfügung steht.

Um solche Konflikte aufzulösen, muss die Inkompatibilität zwischen Gerätetreiber und Gerätesoftware interaktiv durch aktives Handeln des Anwenders aufgelöst werden. Der Anwender muss auf den beteiligten Modulen, beispielsweise einerseits Gerät und andererseits dem Steuercomputer, zueinander passende Softwareversionen, d.h. eine Gerätesoftware bzw. einen passenden Gerätetreiber installieren. Die Auswahl der zueinander passenden Softwareversionen muss durch den Anwender recherchiert werden. Unter Umständen ist dem Anwender eines Geräts eine derartige Konfliktsituation jedoch gar nicht bewusst, weil er nur die vom Gerätetreiber angebotenen, nicht aber die tatsächlich im Gerät vorhandenen Funktionalitäten nutzt.

Die Aufgabe der Erfindung besteht darin, eine Systemanordnung bzw. ein Verfahren in einem prozessverarbeitenden System zum Erkennen von nicht übereinstimmender Funktionalität zwischen Gerätesoftware und einem zugeordneten Gerätetreiber bereitzustellen.

Diese Aufgabe wird durch eine Systemanordnung in einem prozessverarbeitenden System zum Erkennen von nicht übereinstimmender Funktionalität zwischen einer Gerätesoftware und einem zugeordneten Gerätetreiber mit den Merkmalen des Patentanspruchs 1 gelöst bzw. durch ein Verfahren mit den Merkmalen des Patentanspruchs 7 gelöst.

Bevorzugt wird insbesondere eine Systemanordnung in einem prozessverarbeitenden System zum Erkennen von nicht übereinstimmender Funktionalität zwischen einer Gerätesoftware und einem zugeordneten Gerätetreiber mit einer Geräte-Steuervorrichtung mit dem Gerätetreiber einer bestimmten momentanen Gerätetreiberversion, einem Gerät mit der Gerätesoftware einer momentanen Gerätesoftwareversion und einer Schnittstelle zwischen der Gerätesteuervorrichtung und dem Gerät zum Steuern des Gerätes mittels der Geräte-Steuervorrichtung, wobei ein Vergleichsmodul zum Vergleichen der Gerätetreiberversion mit der Gerätesoftwareversion hinsichtlich deren Kompatibilität und zum Veranlassen eines Updates oder einer Fehlermeldung im Falle einer nicht vorhandenen Kompatibilität ausgebildet ist.

Bevorzugt wird verfahrensgemäß ein Verfahren in einem prozessverarbeitenden System zum Erkennen von nicht übereinstimmender Funktionalität zwischen einer Gerätesoftware und einem zugeordneten Gerätetreiber, bei dem zwischen einer Geräte-Steuervorrichtung und einem Gerät über eine Schnittstelle zwischen der Geräte-Steuervorrichtung und dem Gerät eine Gerätetreiberversionsinformation und/oder eine Gerätesoftwareversionsinformation übertragen wird, die Gerätetreiberversionsinformation und die Gerätesoftwareversionsinformation hinsichtlich Kompatibilität der übereinstimmenden Funktionalitäten miteinander verglichen werden und im Fall nicht vorhandener Kompatibilität ein Update durchgeführt wird und/oder eine Fehlermeldung ausgegeben wird.

Beschrieben werden somit eine Softwareanordnung bzw. ein Verfahren, welche automatisch erkennen, ob Funktionsumfang einer Gerätesoftware und damit des Gerätes einerseits und Gerätetreibers andererseits noch übereinstimmen. Bei Bedarf kann automatisch ein Update des Gerätetreibers und/oder der Gerätesoftware auf die zueinander passende Version ausgelöst werden.

Bevorzugt wird insbesondere eine Systemanordnung mit einem Speicher zum Speichern einer Datenbank, in welcher zu jeder Gerätefunktion und/oder jeder Gerätetreiberversion eine Information hinterlegt ist, ab welcher Gerätesoftwareversion diese Gerätefunktion bzw. diese Gerätetreiberversion unterstützt wird, wobei die Schnittstelle zum Übertragen einer Gerätesoftware-Identifizierungsinformation und/oder einer für die Gerätesoftware erforderlichen Gerätetreiber-Identifizierungsinformation zu deren Zuführung zum Vergleichsmodul ausgelegt ist.

Bevorzugt wird insbesondere eine Systemanordnung, bei welcher der Gerätesoftwareversion eine Gerätetreiberversionsinformation zugeordnet ist, ab welcher die Funktionalität einer bestimmten Gerätesoftwareversion vollständig enthalten ist.

Bevorzugt wird insbesondere eine Systemanordnung, bei der das Vergleichsmodul ausgebildet ist, verschiedene Versionsinformationen des Gerätetreibers und der Gerätesoftware auszuwerten und vorhandene Konflikte bezüglich nicht übereinstimmender Funktionalität zu erkennen.

Bevorzugt wird insbesondere eine Systemanordnung, bei der das Vergleichsmodul ausgelegt ist, einen Updatemechanismus für die Gerätesoftware und/oder den Gerätetreiber auszulösen.

Bevorzugt wird insbesondere eine Systemanordnung mit einer Schnittstelle zum Einspeisen von Gerätetreiber und/oder Gerätesoftware von einer externen Quelle, insbesondere von einem Datenträger oder einem externen Dateiserver.

Bevorzugt wird insbesondere ein Verfahren, bei dem zum Vergleichen auf eine Datenbank in der Geräte-Steuervorrichtung und/oder in dem Gerät zugegriffen wird, wobei in der Datenbank zu jeder Gerätefunktion und/oder zu jeder Gerätetreiberversion eine Information hinterlegt ist, ab welcher Gerätesoftwareversion der Gerätesoftware diese Gerätefunktion bzw. diese Treiberversion unterstützt wird.

Bevorzugt wird insbesondere ein Verfahren, bei dem mit der Gerätesoftwareversion eine Information verknüpft ist, ab welcher Gerätetreiberversion die Funktionalität der Gerätesoftwareversion vollständig enthalten ist, wobei diese Information zum Vergleichen verwendet wird.

Bevorzugt wird insbesondere ein Verfahren, bei dem der Vergleich in Verbindung mit einem Verbindungsaufbau zwischen der Geräte-Steuervorrichtung und dem Gerät und/oder dem Gerätetreiber und der Gerätesoftware durchgeführt wird.

Bevorzugt wird insbesondere ein Verfahren, bei dem mit der Gerätesoftwareversion und/oder der Gerätetreiberversion zusätzlich eine Information der zur Gerätesoftware bzw. zum Gerätetreiber kompatiblen Hardware des Gerätes verknüpft wird.

Bevorzugt wird insbesondere ein Verfahren, bei dem im Fall einer nicht vorhandenen Kompatibilität automatisch ein Updatemechanismus für die Gerätesoftware und/oder den Gerätetreiber ausgelöst wird.

Bevorzugt wird insbesondere ein Verfahren, bei dem beim Updaten benötigte Daten und/oder Programme von einer externen Quelle, insbesondere von einem Datenträger oder einem externen Datei-Server geladen werden.

Bevorzugt wird insbesondere ein Verfahren, bei dem beim Updaten die für die Gerätesoftware erforderliche Version des Gerätetreibers installiert wird.

Bevorzugt wird insbesondere ein Verfahren, bei dem beim Updaten die neueste vorhandene Version des Gerätetreibers und/oder der Gerätesoftware installiert wird.

Bevorzugt wird insbesondere ein Verfahren, bei dem beim Updaten eine Auswahlliste verfügbarer und passender Versionen des Gerätetreibers und/oder der Gerätesoftware einem Benutzer zur Auswahl der zu installierenden Versionen angezeigt wird.

Bevorzugt wird insbesondere ein Verfahren, bei dem die zum Gerätetreiber passende Gerätesoftware Bestandteil des Gerätetreibers ist und diese Gerätesoftware vom Gerätetreiber direkt in das Gerät übertragen wird.

Vorteilhafterweise muss der Anwender bzw. der Benutzer des Gerätes nicht mehr recherchieren, welche Software des Gerätetreibers bzw. der Gerätesoftware zusammenpassen. Insbesondere in Fällen, in denen der Benutzer sich der Inkompatibilität nicht bewusst ist, wird eine Fehlfunktion des Gerätes relativ zu Anweisungen mittels der Geräte-Steuervorrichtung vermieden. Das System erkennt selbstständig den Updatebedarf. Das Aufspüren passender Software erfolgt vorzugsweise automatisch. Das Einspielen der passenden Software wird vereinfacht bzw. vollständig automatisiert.

Vorzugsweise enthält der Gerätetreiber eine Datenbank mit einer Zuordnung von Gerätefunktionalitäten relativ zu entsprechenden Gerätesoftwareversionen und Gerätetreiberversionen. Der Gerätetreiber kann Offline alle ihm bekannten Funktionen anbieten und selber im Falle beispielsweise einer Online-Informationsmöglichkeit zu einer externen Quelle oder zu dem Gerät eine Anpassung vornehmen.

Optional kann auch ein Updatebedarf ausgegeben werden, beispielsweise über eine Anzeige an den Benutzer wenn nicht automatisch behebbare Probleme bezüglich eines Updatebedarfs vorliegen.

Vorzugsweise stellt das Gerät eine Information zur Verfügung bezüglich der zugehörigen Gerätetreiberversion, welche der Gerätetreiber liest, wenn eine Onlineverbindung zwischen der Geräte-Steuervorrichtung und dem Gerät hergestellt wird.

Ein Ausführungsbeispiel wird nachfolgend anhand der Zeichnung näher erläutert. Es zeigen:
- Fig. 1: schematische Komponenten eines Gerätes mit installierter Gerätesoftware und einer Steuervorrichtung mit installiertem Gerätetreiber und
- Fig. 2: einen beispielhaften Verfahrensablauf zum Aktualisieren von Gerätetreiber und Gerätesoftware auf eine gemeinsame Version.

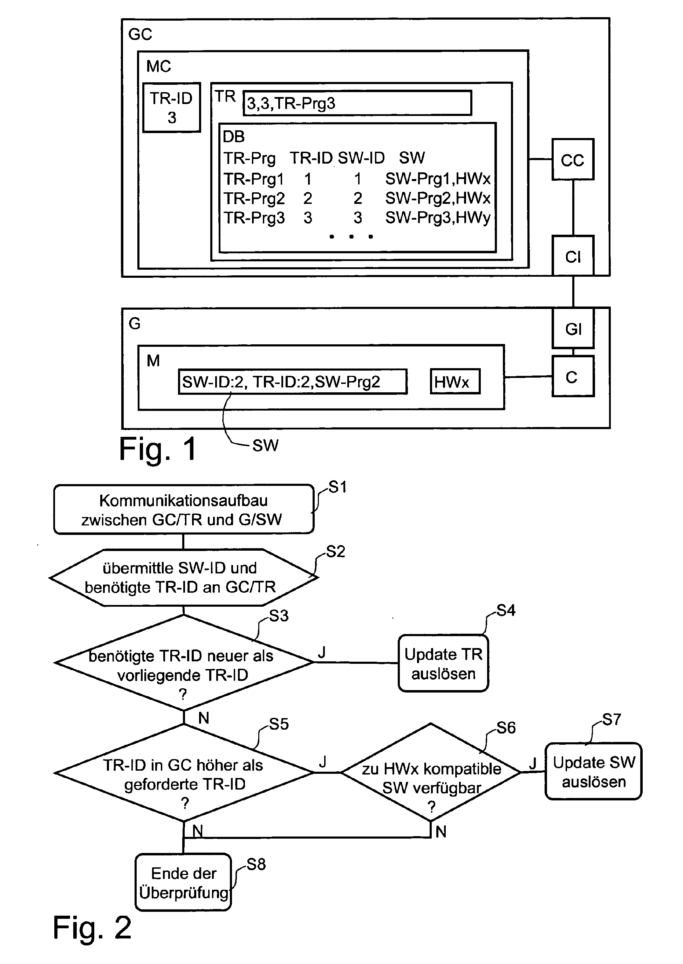

Fig. 1 zeigt schematisch ein Gerät G mit einem Prozessor C zur Steuerung von Funktionalitäten des Geräts G. Daten und Programme, welche zur Steuerung und für den Betrieb des Prozessors C erforderlich sind, sind in einem Speicher M hinterlegt. Zur Steuerung der Funktionalität des Geräts G bzw. des Prozessors C dient eine Gerätesoftware SW, welche in dem Speicher M abgespeichert ist. Die Gerätesoftware SW besteht aus einem eigentlichen Software-Programm SW-Prg2 zur Steuerung des Prozessors C und außerdem aus einer Software-Identifizierungsnummer SW-ID und vorzugsweise einer zugeordneten Gerätetreiber-Identifizierungsnummer TR-ID. Bei dem dargestellten Beispiel handelt es sich um eine Gerätesoftware SW in einer zweiten Versionsstufe mit der Software-Identifizierungsnummer SW-ID 2 und dem Software-Programm SW-Prg2. Dieser Gerätesoftware SW ist ein Gerätetreiber TR mit der Gerätetreiber-Identifizierungsnummer TR-ID 2 zugeordnet. Vorzugsweise ist in dem Speicher M auch eine Hardwareinformation HWx abgespeichert, welche der Gerätesoftware SW zugeordnet ist und angibt, für welchen Gerätetyp oder welche Geräteausbaustufe des Geräts G die Gerätesoftware SW geeignet ist.

Zur Steuerung des Gerätes G dient eine Geräte-Steuervorrichtung GC, welche als integrierte Komponente des Gerätes G oder als externe Einrichtung bereitgestellt ist. Die Geräte-Steuervorrichtung GC umfasst insbesondere einen Prozessor C, einen Speicher MC und eine Steuervorrichtungs-Schnittstelle CI. Die Steuervorrichtungs-Schnittstelle CI dient zum Austausch von Daten und Steueranweisungen mit einer Geräte-Schnittstelle GI des Gerätes G. Dadurch können die Prozessoren C, CC des Gerätes G und der Geräte-Steuervorrichtung GC miteinander kommunizieren und Daten und Steueranweisungen austauschen.

In dem Speicher MC der Geräte-Steuervorrichtung GC ist ein Gerätetreiber TR zur Steuerung des Gerätes G mittels des Prozessors CC der Geräte-Steuervorrichtung GC abgespeichert. Der momentan abgespeicherte Gerätetreiber TR entspricht einer dritten Version mit einer Gerätetreiber-Identifizierungsnummer TR-ID 3 und ist zur Steuerung einer Gerätesoftware SW der dritten Version mit einer Gerätesoftware-Identifizierungsnummer SW-ID 3 ausgelegt. Entsprechend ist ein drittes Gerätetreiber-Programm TR-Prg3 für die Steuerung abgespeichert. Es liegt somit eine Kollision zwischen dem Gerätetreiber TR und der Gerätesoftware SW des an der Geräte-Steuervorrichtung GC angeschlossenen Gerätes G vor.

Der Speicher MC der Geräte-Steuervorrichtung GC umfasst außerdem eine Datenbank DB. In der Datenbank DB sind verschiedene Versionen von Gerätesoftware SW abgespeichert. Außerdem ist jeweils zu der Gerätesoftware SW zugeordnet zusätzlich die Information der für diese Gerätesoftware SW zugeordneten Gerätetreiber-Identifizierungsnummer TR-ID und der zur Gerätesoftware SW zugehörenden Gerätesoftware-Identifizierungsnummer SW-ID abgespeichert. Optional ist außerdem jeweils eine Hardwareinformation HWx, Hwy für die Gerätehardware, auf welcher die Gerätesoftware SW lauffähig ist, hinterlegt.

Beim Aufbau einer Kommunikation zwischen der Geräte-Steuervorrichtung GC und dem Gerät G über die Steuervorrichtungs-Schnittstelle CI und die Geräte-Schnittstelle GI werden anfänglich die entsprechenden Identifizierungsnummern TR-ID, SW-ID für die jeweils den Prozessoren C, CC momentan zugeordneten Versionen des Gerätetreibers TR und der Gerätesoftware SW übertragen und miteinander verglichen. Einer oder beide der Prozessoren CC, C dienen als ein Vergleichsmodul zum Vergleichen der Identifizierungsnummern TR-ID, SW-ID und zum anschließenden Auslösen eines Updatevorgangs, sofern die übertragenen Identifizierungsnummern nicht zueinander passen. Dadurch können wahlweise der Gerätetreiber TR in der Geräte-Steuervorrichtung GC und/oder die Gerätesoftware SW in dem Gerät G aktualisiert werden, so dass nachfolgend der Betrieb des Geräts unter Steuerung der Geräte-Steuervorrichtung GC mit zueinander passender Software, d.h. zueinander passendem Gerätetreiber TR und Gerätesoftware SW aufgenommen werden kann.

Fig. 2 zeigt beispielhaft Schritte eines Verfahrens zum Vergleichen einer momentanen Gerätesoftware bzw. Gerätesoftware-version SW-ID mit einem momentanen Gerätetreiber TR bzw. einer momentanen Gerätetreiberversion TR-ID. Dabei wird die Gerätetreiberversion durch die Gerätetreiber-Identifizierungsnummer TR-ID als Gerätetreiber-Versionsinformation kenntlich gemacht und die Gerätesoftwareversion durch die Gerätesoftware-Identifizierungsnummer SW-ID als GerätesoftwareVersionsinformation kenntlich gemacht.

In einem ersten Verfahrensschritt S1 erfolgt ein Aufbau einer Kommunikation zwischen der Geräte-Steuervorrichtung GC bzw. dem Gerätetreiber TR einerseits und andererseits dem Gerät G bzw. der Gerätesoftware SW über die Schnittstelle, welche aus der Steuervorrichtungs-Schnittstelle CI und der Geräte-Schnittstelle GI ausgebildet wird. Die Übertragung einer Versionsinformation kann in beliebiger Richtung zur entsprechenden Verarbeitung entweder in dem Prozessor C des Gerätes G oder in dem Prozessor CC der Geräte-Steuervorrichtung GC als Vergleichsmodul erfolgen. Bevorzugt wird jedoch gemäß dem zweiten Verfahrensschritt S2 die Übermittlung der Gerätesoftwareversion bzw. der Gerätesoftware-Identifizierungsnummer (SW-ID) mit beispielsweise dem Wert 2 von dem Gerät G zu der Geräte-Steuervorrichtung GC. Optional und bevorzugt wird außerdem die benötigte Version des Gerätetreibers zur Geräte-Steuervorrichtung DC übertragen. Die entsprechende Gerätetreiberversion ist vorzugsweise als die Gerätetreiber-Identifizierungsnummer TR-ID 2 in dem Speicher M des Gerätes G zusammen mit der Gerätesoftware SW abgespeichert.

Der Prozessor CC in der Geräte-Steuervorrichtung GC vergleicht in einem nachfolgenden Verfahrensschritt S3, ob die benötigte Version des Gerätetreibers neuer als die vorliegende Version des Gerätetreibers TR ist. Falls ja, wird in einem nachfolgenden Verfahrensschritt S4 zu einem Updaten des Gerätetreibers TR fortgeschritten. Falls nein, wie im beispielhaften vorliegenden Fall, wird in einem nachfolgenden Verfahrensschritt S5 zu einer Abfrage fortgeschritten, ob der vorliegende momentane Gerätetreiber TR mit der momentanen Gerätetreiberversion bzw. Gerätetreiber-Identifizierungsnummer TR-ID 3 mehr Funktionalität als die im Gerät G vorhandene Gerätesoftware SW bietet. Falls ja, wie dies vorliegend gemäß Fig. 1 der Fall ist, wird in einem nachfolgenden Verfahrensschritt S6 überprüft, ob zur Hardware bzw. dem Gerät G kompatible Gerätesoftware SW verfügbar ist. Falls in diesen beiden Abfrageschritten S5, S6 als Ergebnis nein festgestellt wird, wird in einem nachfolgenden Verfahrensschritt die Überprüfung der Kompatibilität beendet. Andernfalls wird in einem nachfolgenden Schritt S7 ein Update der Gerätesoftware SW in dem Gerät G ausgelöst. Dadurch wird die Gerätesoftware SW auf einen aktuelleren Stand gebracht, um die von dem Gerätetreiber TR angebotenen Funktionalitäten vollständig ausnutzen zu können und/oder Fehler der bisherigen Gerätesoftwareversion zu beseitigen.

Ermöglicht wird somit durch die Systemanordnung bzw. die Verfahrensweise das Erkennen einer übereinstimmenden bzw. einer nicht übereinstimmenden Funktionalität zwischen der Gerätesoftware SW und dem Gerätetreiber TR.

Dafür werden vorzugsweise folgende Informationen verwendet. Der Gerätetreiber TR enthält die Datenbank DB, in welcher die vorhandenen Gerätefunktion und die dafür notwendige Gerätesoftwareversion SW-ID der Gerätesoftware SW hinterlegt ist. Die Gerätesoftware SW stellt neben der eigenen Gerätesoftware-Identifizierungsnummer SW-ID als Gerätesoftwareversionsinformation noch die Information zur Verfügung, ab welcher Gerätetreiberversion des Gerätetreibers TR die im Gerät vorhandene Funktionalität vollständig unterstützt wird. Optional stellt die Gerätesoftware SW noch eine Liste der zur Gerätesoftware kompatiblen Hardware-Versionen bzw. entsprechende Hardwareinformation HWx bezüglich möglicher Geräteversionen zur Verfügung.

Das Erkennen einer möglichen Konfliktsituation bzw. nicht übereinstimmenden Kompatibilität erfolgt vorzugsweise beim Aufbau der Kommunikation zwischen Geräte-Steuervorrichtung GC bzw. Gerätetreiber TR einerseits und andererseits dem Gerät G bzw. der Gerätesoftware SW. Zu diesem Zeitpunkt übermittelt die Gerätesoftware SW die eigene Version sowie die Version von dem Gerätetreiber TR (S1, S2), der die vollständige Funktionalität der Gerätesoftware SW beinhaltet.

Dann wird die von der Gerätesoftware SW geforderten Version vom Gerätetreiber TR mit der tatsächlichen Version des installierten Gerätetreibers TR durch den Gerätetreiber TR bzw. den zugeordneten Prozessor CC als Vergleichsmodul verglichen (S3). Ergibt dieser Vergleich, dass die installierte Version vom Gerätetreiber TR zu alt ist, so wird der Update-Mechanismus für den Gerätetreiber TR ausgelöst (S4). Nachfolgend vergleicht der Prozessor bezüglich des Gerätetreibers TR anhand der im Gerätetreiber TR bzw. anhand der im Speicher M enthaltenen Datenbank DB, ob die Funktionalität vom Gerät durch ein Update der Gerätesoftware SW angepasst werden kann (S5, S6). Wenn dies der Fall ist, wird der Update-Mechanismus für die Gerätesoftware SW gestartet.

Der Update-Mechanismus für die Gerätesoftware SW überprüft, ob eine Version der Gerätesoftware SW zu der vorliegenden Hardware-Version des Gerätes G kompatibel ist. Die vorliegende Hardware-Version kann die Gerätesoftware SW beispielsweise ermitteln durch Auslesen eines nicht-flüchtigen Speichers des Geräts G, in dem die Hardware-Version zum Zeitpunkt der Fertigung gespeichert wird, durch einen Modultest der Hardware bzw. des Gerätes G oder durch eine Auswertung von Lötbrücken.

Der Update-Mechanismus für den Gerätetreiber TR kann auf verschiedene Weisen arbeiten. Gemäß einer einfachen Variante erfolgt ein Einlesen von einem externen Datenträger, beispielsweise einer Diskette in einem Diskettenlesegerät als einer Extern-Schnittstelle I der Geräte-Steuervorrichtung GC. Im Fall eines Computers als der Geräte-Steuervorrichtung GC wird der Benutzer vorzugsweise aufgefordert, einen Speicherort anzugeben, an dem sich ein für das Update benötigtes Installationsprogramm für den Gerätetreiber TR befindet.

Besonders bevorzugt wird ein Update mittels der Extern-Schnittstelle I über eine internetbasierte Verbindung zu einem Datei-Server, von dem verschiedene Versionen des Gerätetreibers TR und/oder der Gerätesoftware SW bezogen werden können. Befinden sich auf dem Datei-Server neben der von der Gerätesoftware SW geforderten Version auch noch neuere Versionen des Gerätetreibers TR, so gibt es verschiedene Möglichkeiten zur Bestimmung der zu installierenden Version. Beispielsweise wird automatisch die neueste Version installiert. Alternativ wird automatisch die von der Gerätesoftware SW geforderte Version des Gerätetreibers TR installiert. Der Anwender kann aufgefordert werden, von allen möglichen Versionen die zu installierende Version auszuwählen. Bei dieser Auswahl werden alle Versionen zwischen der von der Gerätesoftware SW geforderten bis zur neusten Version aufgelistet.

Entsprechend kann auch ein Update verschiedener verfügbarer Gerätesoftwareversionen erfolgen. Der Update-Mechanismus für das Update der Gerätesoftware SW arbeitet entsprechend dem Update-Mechanismus für den Gerätetreiber TR. Vorzugsweise gibt es jedoch zusätzlich noch die Möglichkeit, dass die Gerätesoftware SW bereits in dem Gerätetreiber TR enthalten ist, wie dies anhand Fig. 1 beschrieben ist, und somit diese enthaltene Gerätesoftware SW direkt in das Gerät G übertragen werden kann. Außerdem kann für jede Version der Gerätesoftware SW eine Hardwareinformation HWx hinterlegt sein, die angibt, welche Hardware-Versionen zu dieser Gerätesoftware SW kompatibel sind. Somit kann ausgeschlossen werden, dass eine Gerätesoftware SW auf eine nicht passende Hardware installiert wird.

## Patentansprüche

1. Systemanordnung in einem prozessverarbeitenden System zum Erkennen von nicht übereinstimmender Funktionalität zwischen einer Gerätesoftware (SW) und einem zugeordneten Gerätetreiber (TR) mit
- einer Geräte-Steuervorrichtung (GC) mit dem Gerätetreiber (TR) einer bestimmten momentanen Gerätetreiberversion (TR-ID),
- einem Gerät (G) mit der Gerätesoftware (SW) einer momentanen Gerätesoftware-Version (SW-ID) und
- einer Schnittstelle (CI, DI) zwischen der Gerätesteuervorrichtung (GC) und dem Gerät (G) zum Steuern des Gerätes (G) mittels der Geräte-Steuervorrichtung (GC),
**gekennzeichnet durch**
- ein Vergleichsmodul (CC, C) zum Vergleichen der Gerätetreiberversion (TR-ID) mit der Gerätesoftwareversion (SW-ID) hinsichtlich deren Kompatibilität und zum Veranlassen eines Updates oder einer Fehlermeldung im Falle einer nicht vorhandenen Kompatibilität.

2. Systemanordnung nach Anspruch 1 mit einem Speicher (MC) zum Speichern einer Datenbank (DB), in welcher zu jeder Gerätefunktion und/oder jeder Gerätetreiberversion (TR-ID) eine Information hinterlegt ist, ab welcher Gerätesoftwareversion (SW-ID) diese Gerätefunktion bzw. diese Gerätetreiberversion unterstützt wird, wobei die Schnittstelle (CI, GI) zum Übertragen einer Gerätesoftware-Identifizierungsinformation (TR-ID) und/oder einer für die Gerätesoftware (SW) erforderlichen Gerätetreiber-Identifizierungsinformation (TR-ID) zu deren Zuführung zum Vergleichsmodul ausgelegt ist.

3. Systemanordnung nach Anspruch 1 oder 2, bei welcher der Gerätesoftwareversion eine Gerätetreiberversionsinformation (TR-ID) zugeordnet ist, ab welcher die Funktionalität einer bestimmten Gerätesoftwareversion (SW-ID) vollständig enthalten ist.

4. Systemanordnung nach einem vorstehenden Anspruch, bei der das Vergleichsmodul ausgebildet ist, verschiedene Versionsinformationen (TR-ID, SW-ID) des Gerätetreibers (TR) und der Gerätesoftware (SW) auszuwerten und vorhandene Konflikte bezüglich nicht übereinstimmender Funktionalität zu erkennen.

5. Systemanordnung nach einem vorstehenden Anspruch, bei der das Vergleichsmodul (CC, C) ausgelegt ist, einen Updatemechanismus für die Gerätesoftware (SW) und/oder den Gerätetreiber (TR) auszulösen.

6. Systemanordnung nach einem vorstehenden Anspruch mit einer Schnittstelle (I) zum Einspeisen von Gerätetreiber und/oder Gerätesoftware von einer externen Quelle, insbesondere von einem Datenträger oder einem externen Dateiserver.

7. Verfahren in einem prozessverarbeitenden System zum Erkennen von nicht übereinstimmender Funktionalität zwischen einer Gerätesoftware und einem zugeordneten Gerätetreiber, bei dem
- zwischen einer Geräte-Steuervorrichtung (GC) und einem Gerät (G) über eine Schnittstelle (CI, GI) zwischen der Geräte-Steuervorrichtung (GC) und dem Gerät (G) eine Gerätetreiber-versionsinformation (TR-ID) und/oder eine Gerätesoftwareversionsinformation (SW-ID) übertragen wird,
- die Gerätetreiberversionsinformation (TR-ID) und die Gerätesoftwareversionsinformation (SW-ID) hinsichtlich Kompatibilität der übereinstimmenden Funktionalitäten miteinander verglichen werden und
- im Fall nicht vorhandener Kompatibilität ein Update durchgeführt wird und/oder eine Fehlermeldung ausgegeben wird.

8. Verfahren nach Anspruch 7, bei dem zum Vergleichen auf eine Datenbank in der Geräte-Steuervorrichtung (GC) und/oder in dem Gerät (G) zugegriffen wird, wobei in der Datenbank zu jeder Gerätefunktion und/oder zu jeder Gerätetreiberversion eine Information hinterlegt ist, ab welcher Gerätesoftwareversion (SW-ID) der Gerätesoftware (SW) diese Gerätefunktion bzw. diese Treiberversion unterstützt wird.

9. Verfahren nach Anspruch 7 oder 8, bei dem mit der Gerätesoftwareversion (SW-ID) eine Information verknüpft ist, ab welcher Gerätetreiberversion (TR-ID) die Funktionalität der Gerätesoftwareversion (SW-ID) vollständig enthalten ist, wobei diese Information zum Vergleichen verwendet wird.

10. Verfahren nach einem der Ansprüche 7 bis 9, bei dem der Vergleich in Verbindung mit einem Verbindungsaufbau zwischen der Geräte-Steuervorrichtung (GC) und dem Gerät (G) und/oder dem Gerätetreiber (TR) und der Gerätesoftware (SW) durchgeführt wird.

11. Verfahren nach einem der Ansprüche 7 bis 10, bei dem mit der Gerätesoftwareversion (SW-ID) und/oder der Gerätetreiberversion (TR-ID) zusätzlich eine Information (HWx) der zur Gerätesoftware (SW) bzw. zum Gerätetreiber (TR) kompatiblen Hardware des Gerätes (G) verknüpft wird.

12. Verfahren nach einem der Ansprüche 7 bis 11, bei dem im Fall einer nicht vorhandenen Kompatibilität automatisch ein Updatemechanismus für die Gerätesoftware (SW) und/oder den Gerätetreiber (TR) ausgelöst wird.

13. Verfahren nach einem der Ansprüche 7 bis 12, bei dem beim Updaten benötigte Daten und/oder Programme von einer externen Quelle, insbesondere einem Datenträger oder einem externen Datei-Server geladen werden.

14. Verfahren nach einem der Ansprüche 7 bis 14, bei dem beim Updaten die für die Gerätesoftware (SW) erforderliche Version des Gerätetreibers (TR) installiert wird.

15. Verfahren nach einem der Ansprüche 7 bis 13, bei dem beim Updaten die neueste vorhandene Version des Gerätetreibers (TR) und/oder der Gerätesoftware (SW) installiert wird.

16. Verfahren nach einem der Ansprüche 7 bis 13, bei dem beim Updaten eine Auswahlliste verfügbarer und passender Versionen des Gerätetreibers (TR) und/oder der Gerätesoftware (SW) einem Benutzer zur Auswahl der zu installierenden Versionen angezeigt wird.

17. Verfahren nach einem der Ansprüche 7 bis 16, bei dem die zum Gerätetreiber (TR) passende Gerätesoftware (SW) Bestandteil des Gerätetreibers (TR) ist und diese Gerätesoftware (SW) vom Gerätetreiber (TR) direkt in das Gerät (G) übertragen wird.
